(19) Europäisches Patentamt
European Patent Office
Office européen des brevets

(11) Publication number: 0 074 198 A1

# (12) EUROPEAN PATENT APPLICATION

(21) Application number: 82304355.9

(22) Date of filing: 18.08.82

(51) Int. Cl.[3]: B 01 D 13/04
G 01 N 27/40

(30) Priority: 21.08.81 US 295183

(43) Date of publication of application: 16.03.83 Bulletin 83/11

(84) Designated Contracting States: DE FR GB

(71) Applicant: EASTMAN KODAK COMPANY
343 State Street
Rochester, New York 14650(US)

(72) Inventor: Daniel, Daniel Salman
3051 St. Paul Boulevard
Rochester New York 14617(US)

(74) Representative: Pepper, John Herbert et al,
KODAK LIMITED Patent Department P.O. Box 114 190
High Holborn
London WC1V 7EA(GB)

(54) **Hydrogen ion-selective membranes and electrodes containing same.**

(57) The hydrogen ion-selective membranes contain a hydrogen-ion ionophore and a compound capable of solvating a complex of a hydrogen ion and the ionophore. The ionophore is at least partially neutralized. Dry-operative electrodes using these membranes are also disclosed.

EP 0 074 198 A1

# HYDROGEN ION-SELECTIVE MEMBRANES AND ELECTRODES CONTAINING SAME

This invention relates to hydrogen ion-selective membranes useful in preparing electrodes for determining hydrogen ion concentrations in solution. More specifically, this invention relates to membranes that include an ion-selective ionophore and a compound capable of solvating the ionophore.

A great variety of electrode types and structures for the measurement of various ions in solution is known. Usually, devices for ion-concentration measurements include a reference electrode and a separate ion-selective electrode. When these two electrodes are simultaneously immersed into the same body of solution to be analyzed, a potential develops across the electrodes that is proportional to the concentration in solution of the ion to which the ion-selective electrode is sensitive.

One well-known type of ion-selective electrode comprises an electrode body (usually a glass container) containing a known reference solution in contact with a half-cell of known potential and an ion-selective glass membrane located in an aperture in the electrode body. The ion-selective membrane is mounted in such a fashion that, when the electrode is immersed in the unknown solution, the membrane contacts both the reference solution within the electrode body and the unknown solution. A metal probe coated with a layer of an insoluble salt of the metal in the reference solution is immersed in the reference solution. This metal probe serves as one of the contacts for measuring the potential between the electrodes and

provides a reference potential for the electrode. The selectivity of the electrode is determined by the composition of the glass membrane. This type of electrode is referred to in the art as a "barrel" type of electrode.

The ion sensitivity of the electrode of the barrel type is limited because only a limited number of ion-selective glasses are known. The development of synthetic, polymeric ion-selective membranes has broadened the list of ions that are determined potentiometrically using "barrel" electrodes. These membranes generally include a polymeric binder or support impregnated with a solution of an ionophore in a solvent for the ionophore. The ionophore is a compound capable of selectively complexing the desired ion and transporting it through the membrane. This compound is also referred to in the art as an ion-selective carrier. By careful selection of the ionophore, solvent, etc., membranes of this type are custom-designed to sense selectively a particular ion.

One synthetic, polymeric ion-selective membrane is described in U.S. Patent 3,743,588. This patent describes an ion-specific membrane including a hydrophobic elastomeric polymer with a dielectric constant of between 4 and 13 and an ionophore. The ionophores include hydrogen-ion carriers that are hydrophobic, lipophilic uncouplers. These uncouplers are hydrophobic derivatives of uncouplers that are known to uncouple oxidative phosphorylation in mitochondria and chloroplasts. These derivatives are made hydrophobic by addition of a long hydrocarbon chain to the molecule. For example, the compound 2,6-dinitrophenol is a common physiological

ion-carrier. By incorporating a long hydrocarbon chain in the para or 4 position, this compound is rendered hydrophobic. The patent describes the use of 4-dodecyl-2,6-dinitrophenol as a hydrogen-ion ionophore. It is believed that the hydrophobic nature of the ionophore described in this patent prevents the ionophore from being leached from the membrane in the aqueous solutions to be measured. At the same time, the ionophore maintains its capability of transporting hydrogen ions in the membrane composition. In order to accomplish this transport, another membrane component must be present that is capable of solvating the ionophore. The patent describes hydrophobic elastomeric polymers and particularly high dielectric constant polymers that include siloxanes.

In U.S. Patent 3,691,047, there is described an alternative to the solvating polymers disclosed in U.S. Patent 3,743,588. The membrane described includes a substantially nonvolatile organic solvent liquid as the solvating material. Thus, the membrane includes a jelled mixture having a solid phase that is a substantially chemically inert polymeric matrix and a liquid phase that includes the ionophore dissolved in the organic solvent. This organic solvent solvates the ionophore and is therefore sometimes referred to as a "carrier solvent" or "ionophore solvent". According to this reference, the composition of the solid phase is not critical. Cellulose triacetate is described as being useful.

A significant advance in the ion-selective electrode art is the dry-operative ion-selective electrode described in U.S. Patent 4,214,968. Prior to the invention of these dry-operative ion-selective electrodes, electrodes had to be either stored in an aqueous solution or treated with aqueous solution just prior to use in an ion activity-determining operation. The electrodes of U.S. Patent 4,214,968 include:

(a) a dried internal reference electrode and,

(b) in contact with the reference electrode, a hydrophobic ion-selective membrane.

The term "dry-operative" describes an ion-selective electrode that provides reproducible potentiometric determination of ion activity, which is related to the ion concentration of aqueous test solutions, with no requirement for wet storage or preconditioning prior to use.

Hydrogen-ion membranes using a variety of ionophores are useful in all of the electrode structures described above. Unfortunately, the performance of known membranes is less than is desired. For example, while many of these membranes are capable of determining the amount of hydrogen ion in a test solution quantitatively, the ion-selective electrode frequently must be in contact with a solution for an extended period of time, e.g. on the order of from 3 minutes to as long as 24 hours in some cases. Further, many of these electrodes have less sensitivity than is desired. It is the object of this invention to solve these problems.

It has now been found that the performance of hydrogen ion-selective membranes can be greatly improved by partially neutralizing the hydrogen-ion ionophore. By partially neutralizing the hydrogen-ion ionophore, the response time, i.e. the time the ion-selective electrode must be in contact with the test solution before a reading can be taken,is reduced and the sensitivity of an electrode using the membrane composition is increased.

In accordance with the present invention, there is provided an ion-selective membrane that includes:

(1) a hydrogen-ion ionophore and

(2) a compound capable of solvating a complex of a hydrogen ion and the hydrogen-ion ionophore,

characterized in that the ionophore is at least partially neutralized with base.

These ion-selective membranes are useful in the preparation of hydrogen ion-selective electrodes, preferably of the dry-operative type described in U.S. Patent 4,214,968. Such a dry-operative electrode includes:

(a) a dried internal reference electrode comprising the dried residue of a solution of a salt and a hydrophilic polymeric binder in a solvent for the polymer and the salt and,

(b) in contact with the reference electrode, a hydrophobic hydrogen ion-selective membrane of predetermined uniform thickness in regions thereof intended for contact with a sample for analysis, the membrane including a hydrogen-ion ionophore and a compound capable of solvating a complex of a hydrogen ion and the hydrogen-ion ionophore,

characterized in that the hydrogen-ion ionophore is at least partially neutralized with base.

In accordance with the present invention there is further provided a dry-operative ion-selective electrode including a support having thereon:

(a) a dried internal reference electrode including a metal/metal salt reference electrode, said reference electrode having a conducting layer of a metal in contact with a layer of an insoluble salt of the metal, and a dried electrolyte layer including the dried residue of a water-soluble salt having as an anion the anion of the metal salt layer and a hydrophilic polymeric binder in a solvent for the polymer and salt, and

(b) in contact with the reference electrode, a hydrophobic hydrogen ion-selective membrane of predetermined uniform thickness in regions thereof intended for contact with a sample for analysis, the membrane including a hydrogen-ion ionophore and a compound capable of solvating a complex of a hydrogen ion and the hydrogen-ion ionophore,

characterized in that the hydrogen-ion ionophore is at least partially neutralized with base.

As used herein, the expressions "dry-operative", "dried", and "uniform" have the definitions given in U.S. Patent 4,214,968.

The term "dry-operative" describes an ion-selective electrode that provides reproducible potentiometric determination of ionic activity which

can be related to the ion concentration of aqueous test solutions with no requirement for "wet" storage (i.e. keeping in an aqueous solution) or preconditioning (i.e. soaking in a salt solution) prior to use.

The term "uniform" when used in reference to the thickness of the ion-selective membrane of a "dry-operative" electrode describes a predetermined thickness tolerance in regions of the layer intended for contact with a sample for analysis. This tolerance is met if the drift exhibited by the electrode incorporating such a layer can be calibrated, i.e. can provide reproducible determinations of potential related to concentration by calibration within an error tolerance acceptable for the particular measurement without preconditioning or permitting the electrode to reside in the test solution for a period sufficient to achieve conditioning by the test solution. Uniformity of thickness as exhibited by dry operativeness will generally call for a maximum variation in the thickness of the membrane of at most 20% in regions thereof intended for contact with a sample for analysis.

The term "dried" when used in reference to layers of electrodes refers to a physical state of such layers brought about by subjecting the layer, in manufacture, to drying conditions, i.e. conditions of temperature, reduced vapor pressure or the like, adequate to accomplish removal of sufficient solvent or dispersing medium to render the layer non-tacky, as the term is commonly interpreted in the coating arts, prior to the application of any overlying layer(s). Such "dried" layers generally demonstrate minimal, if any,

measurable conductivity and in the case where gelatin is used as the binder for the electrolyte layer contain less than 15% by weight water and, in some cases, even as low as 12-13% by weight of water.

Hydrogen-ion ionophores are compounds having at least one labile hydrogen atom. These compounds can complex with a hydrogen ion and therefore can transport the hydrogen ion through the membrane.

In accordance with the present invention, the hydrogen-ion ionophore is at least partially neutralized. By "at least partially neutralized" is meant the hydrogen-ion ionophore is in contact with sufficient base to improve substantially (e.g., by at least 10 percent) the response time and sensitivity of the membrane. Partial neutralization is detected as a change of color of the ionophore in the presence of base. Usually, the performance-improving amount of base is 10 percent on a molar basis, although higher amounts of base are also useful. The term "base" includes compounds capable of removing a proton from the ionophore. Preferably, the base is solvated by the compound capable of solvating the complex of the hydrogen ion and the hydrogen-ion ionophore, by the ionophore itself, or by a combination of the two.

Preferably, the hydrogen-ion ionophore is a hydrophobic compound. By incorporating a hydrophobic hydrogen-ion ionophore in the membrane, the ionophore is not as easily leached from the membrane when the membrane comes into contact with an aqueous solution. In embodiments where leaching of the ionophore is tolerable, the ionophore need not be hydrophobic. In either case, the base used to partially neutralize the ionophore should be

compatible with the ionophore and the solvating component of the membrane, that is, it should bring about no adverse effect and should result in a homogeneous mixture. In the case of the preferred hydrophobic hydrogen-ion ionophore, the base is also a hydrophobic compound. Useful hydrophobic bases include amines, such as trioctylamine, tetramethylguanidine, cyclohexylamine, and trihexylamine. Where the hydrogen-ion ionophore is not hydrophobic, other bases, such as alkali metal hydroxides or alkoxides including potassium and sodium hydroxide, ethoxide, or methoxide are useful, provided the base does not precipitate the ionophore in the carrier solvent.

As noted previously, the hydrogen-ion ionophore in the membrane is preferably at least 10 percent neutralized on a molar basis. Neutralization can, of course, be as high as 100 percent. The amount of neutralization is independent of the number of labile hydrogen atoms in the hydrogen-ion ionophore. In other words, it is the molar concentration of the base that is the determining factor and not its concentration based on the normality of the hydrogen-ion ionophore. It is especially preferred that the hydrogen-ion ionophore be between 10 percent and 70 percent neutralized on a molar basis.

Any of a wide variety of hydrogen-ion ionophores is useful in the practice of the present invention. Useful hydrogen-ion ionophores are compounds that uncouple oxidative phosphorylation in mitochondria and chloroplasts, particularly hydrophobic derivatives of these compounds. Examples of these hydrogen-ion ionophores include 2,6-dinitrophenol, 4-octadecyl-2,6-dinitrophenol, 2,6-dichlorophenol, and similar compounds. Particularly preferred hydrogen-ion ionophores are compounds having the following formula:

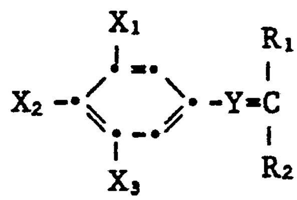

wherein:

$X_1$, $X_2$, and $X_3$ are independently selected and each can be a hydroxy group; an amino group such as dimethylamino, anilino, methylamino or morpholino; a halogen, such as chloro, bromo, or iodo; a halogen-substituted alkyl group, such as trifluoromethyl; an alkoxy group such as methoxy, pentoxy, and octadecyloxy; a halogen-substituted alkoxy group; an alkyl group having from 4 to 8 carbon atoms, such as _t_-butyl; or an electron-withdrawing group, such as the groups defined for $R_1$ and $R_2$ below; provided not more than one of $X_1$, $X_2$ and $X_3$ is hydroxy.

Y can be N, CH, or NH-N provided that, if Y is N or CH, one of $X_1$, $X_2$ and $X_3$ must be hydroxy, and if Y is NH-N, the options for $X_1$, $X_2$, and $X_3$ can include hydrogen.

$R_1$ and $R_2$ are independently selected electron-withdrawing groups, such as: a nitro group; a cyano group; a paranitrophenyl group; an acid group represented by $-CO_2R_3$, wherein $R_3$ is hydrogen or alkyl having 1-12 carbon atoms, such as methoxycarbonyl, ethoxycarbonyl, and decyloxycarbonyl; a keto group represented by $-COR_4$, wherein $R_4$ is selected from the groups defined for $R_3$ or is an aromatic or heteroaromatic group, such as

phenyl and 3- or 4-pyridyl, or is a halogen-substituted alkyl, such as trifluoromethyl; or $R_1$ and $R_2$ represent the atoms necessary to complete a carbocyclic ring structure, such as a cyclopentyl, cyclohexyl, fluorene, or indene.

Specific examples of particularly useful hydrogen-ion ionophores include:

(a) 3,5-di-t-butyl-4-hydroxybenzylidene malononitrile,

(b) malononitrile-4-trifluoromethoxyphenylhydrazone,

(c) malononitrile-4-dimethylaminophenylhydrazone,

(d) malononitrile-4-nitrophenylhydrazone,

(e) malononitrile-(3,5-dibromo-4-hydroxyphenyl)-hydrazone,

(f) 1-cyano-2-(3,5-di-t-butyl-4-hydroxyphenyl)-1-(4-nitrophenyl)ethylene,

(g) 4-hydroxy-3,5-dinitrobenzylidene malononitrile, and

(h) 2-cyano-1-(3,5-di-t-butyl-4-hydroxyphenyl)-3-phenylpropene-3-one.

In addition to the partially neutralized hydrogen-ion ionophore, the membrane includes a compound capable of solvating a hydrogen-ion complex of the ionophore. Solvation is necessary so that the hydrogen ion can be transported through the membrane. A polymeric binder capable of solvating the ionophore can be used, enabling the two components of the membrane to form a self-supporting unit. Polymers that are useful in this embodiment are dependent upon their ability to solvate the partially neutralized hydrogen-ion ionophore. It is only necessary that the complex of hydrogen ion with the ionophore be solvated. In practice, compounds

capable of solvating the complex are almost always also capable of solvating the uncomplexed ionophore. If the polymer is capable of dissolving, at least partially, the hydrogen-ion ionophore, it is useful. Suitable polymers include polyurethanes, chloroprene polymers, vinylidene fluoride-hexafluoropropylene polymers, and, particularly, organopolysiloxane polycarbonate block copolymers. Block copolymers of this type and methods for their preparation are described in U.S. Patent 3,419,634. Specifically, these block copolymers are organopolysiloxane-polycarbonate block copolymers having terminal monovalent aliphatically unsaturated organo radicals of the formula,

$$CV_a-\overset{V_b}{\overset{|}{C}}R''Y$$

which comprise (A) from 1 to 95 percent by weight of organopolysiloxane blocks consisting essentially of chemically combined diorganosiloxy units of the formula,

$$R'_2SiO$$

and (B) from 5 to 99 percent by weight of blocks of the reaction product of a dihydroxy compound of the formula,

$$HOZOH$$

and a carbonyl halide or a diaryl carbonate, where R' is a monovalent hydrocarbon radical, a halogenated monovalent hydrocarbon radical, or a cyanoalkyl radical; R" is a divalent hydrocarbon radical or a halogenated divalent hydrocarbon radical; Z is a R" radical or a R"QR" radical, where Q is divalent oxyaryleneoxy, sulfonyl, sulfinyl, oxy or thio; Y is -O-;

$-O\overset{O}{\overset{\|}{C}}O-$; $-\overset{R'''}{\overset{|}{N}}-\overset{O}{\overset{\|}{C}}O-$; $-O\overset{O}{\overset{\|}{C}}NHR''HN\overset{O}{\overset{\|}{C}}O-$; $-O\overset{O}{\overset{\|}{C}}R''\overset{O}{\overset{\|}{C}}O-$; $-\overset{O}{\overset{\|}{C}}OR''O-$, or

$-SC(R''')_2\overset{O}{\overset{\|}{C}}O-$ ;

R''' is hydrogen or an alkyl radical; V is hydrogen, a monovalent hydrocarbon radical; or a halogenated monovalent hydrocarbon radical; a is 1 or 2; and b is 0 or 1.

The preparation of conventional hydrogen ion-selective membranes using these block copolymers is described in U.S. Patent 3,743,588. Membranes according to the present invention are made in a similar manner except that a partially neutralized hydrogen-ion ionophore is used instead of the non-neutralized hydrogen-ion ionophores of the patent.

The compound capable of solvating the hydrogen-ion ionophore can be a separate organic solvent. When such compounds are used, the membrane is generally not self-supporting and a separate support is desirable. For example, a porous glass support is useful. The partially neutralized hydrogen-ion ionophore is dissolved in the organic solvent and then the solution is imbibed into the porous glass support to provide the membrane. As another alternative, the solution of the hydrogen-ion ionophore can be dispersed in a hydrophobic binder. The binder dispersion is then coated and dried to produce the membrane.

Any of a wide variety of organic solvents can be employed. The solvent, sometimes referred to as a carrier solvent or ionophore solvent, provides ion mobility in the membrane. The solvent must be a solvent for the hydrogen-ion ionophore and, in embodiments having a hydrophobic binder, the solvent must be compatible with the binder. Useful organic solvents include phthalates, sebacates, aromatic and aliphatic ethers, phosphates, mixed aromatic aliphatic phosphates, adipates, nitrated ethers, and mixtures of these solvents. Particularly useful solvents include bis(2-ethylhexyl)-4-nitrophthalate, dioctylphenylphosphonate, o-nitrophenylphenylether, o-nitrophenyloctylether, and tris(2-ethylhexyl)-phosphate.

Where the hydrogen-ion ionophore is included in the solvent as described above, a membrane is formed using a dispersion of the solvent-ionophore in a binder. Useful binders include any of the hydrophobic natural or synthetic polymers capable of forming thin films of sufficient permeability to produce, in combination with the partially neutralized ionophores and ionophore solvent, ionic mobility across the membrane. Useful polymers include poly(vinyl chloride); poly-(vinylidene chloride); poly(acrylonitrile); polyurethanes, particularly aromatic polyurethanes; copolymers of vinyl chloride and vinylidene chloride; poly(vinyl butyral); poly(vinyl formal); poly(vinyl acetate); silicone elastomers; and copolymers of vinyl alcohol, copolymers of cellulose esters, and copolymers of polycarbonates. Other useful polymers include carboxylated polymers of poly(vinyl chloride) and mixtures and copolymers of

the above. Membranes using these polymer binders including the ionophores and the ionophore solvents are prepared using conventional filmcoating or casting techniques.

The membranes contain the described components over a wide range of concentrations or coverages. The coverage of ionophore varies with the particular ionophore used and the compound used to solvate the ionophore, as well as other factors. The preferred membranes comprise a hydrophobic binder having dispersed therein the solvent-ionophore. The membranes generally have a thickness in the range of from 2 μm to 20 μm. In these membranes, ionophore coverages of between 0.1 $g/m^2$ and 2.0 $g/m^2$ are useful and coverages between 0.2 $g/m^2$ and 0.8 $g/m^2$ are preferred.

The ionophore solvent, where used, is present in an amount sufficient to solvate the ionophore and the amount will therefore depend on the particular solvent and ionophore chosen. Generally, more solvent is used than is necessary to solvate the ionophore so that the ionophore remains solvated under a variety of storage conditions. An excess in the range of 100-500 percent on a weight basis is useful.

The amount of hydrophobic binder present is determined by the desired thickness of the membrane and by the necessity for providing support for the ionophore-solvent dispersion. Usually, the coverage of ionophore solvent will be within the range of 2 $g/m^2$ to 12 $g/m^2$.

In addition to the binder, hydrogen-ion ionophore, and solvent, the membranes can contain other components, such as surfactants and plasticizers. Surfactants serve a variety of functions

including improving the coatability of the membrane composition and improving the solvation of the ionophore. Useful surfactants include nonionic surfactants such as the alkylaryl polyether alcohols (Triton (Trade Mark) surfactants) available from Rohm and Haas Co; (p-nonylphenoxy)glycerol (Surfactant 10G (Trade Mark)) available from Olin Mathieson Corp; polyoxyethylene (20) oleyl ether (Brij 98 (Trade Mark)), polyoxyethylene sorbitan monolaurate (Tween 20 (Trade Mark)) and Span 80 (Trade Mark), all available from Atlas Chemical Industries; poly(dimethyl-co-methylphenyl siloxane) (DC-510 (Trade Mark)) available from Dow Corning; Zonyl FSN (Trade Mark) available from E I duPont; and fluorochemical surfactant FC-134 (Trade Mark) available from 3M Co.

The membranes of the present invention are useful in a variety of electrode structures, for example, in place of, or in addition to, the glass ion-selective membrane of a conventional barrel-type electrode. Useful electrodes of this type are disclosed, for example, in U.S. Patents 3,598,713, 3,502,560, 3,562,129, 3,691,047, 3,753,887, 3,833,495, 3,671,414 and 3,743,588.

Preferably, the hydrogen ion-selective membrane is used in a dry-operative ion-selective electrode of the kind described in U.S. Patent 4,214,968.

The following examples will serve to illustrate the practice of the invention.

Example 1:

A dry-operative hydrogen-ion-selective electrode was prepared by coating a membrane of the present invention on a dried reference element. The dried reference element was prepared by first preparing a silver/silver halide layer according to the procedure of Example 1 of U.S. Patent 4,214,968.

A sample of vacuum-deposited metallic silver on a polyethylene terephthalate support was prepared. A portion of this sample was treated for five minutes in the following solution:

| | |
|---|---|
| glacial acetic acid | 0.45 ml |
| sodium hydroxide | 0.20 g. |
| potassium ferricyanide | 0.80 g. |
| potassium chloride | 2.50 g. |
| distilled water to 1 litre | |

The sample was then washed for five minutes in running distilled water.

Visual inspection revealed that partial conversion to silver chloride had occurred, leaving a contiguous layer of metallic silver adjacent the support. A narrow strip along one edge was dipped briefly in a thiosulfate bath to uncover the silver layer for purposes of making electrical contact.

The remainder of the reference electrode was prepared by coating the silver/silver halide layer with a composition comprising a water solution of gelatin (5 $g/m^2$), sodium chloride (1.25 $g/m^2$), sodium hydrogen phthalate (pH 5.0/1.25 $g/m^2$) and the surfactant Triton X-100 (Trade Mark) (0.06 $g/m^2$). This composition was coated on the silver/silver halide layer and then dried.

A membrane layer was coated on the reference element by coating and drying a composition comprising, in a tetrahydrofuran solvent, 1.8% by weight carboxylated poly(vinyl chloride) (5.0 $g/m^2$), bis(2-ethylhexyl)-4-nitrophthalate (6.0 $g/m^2$), 3,5-di-t-butyl-4-hydroxybenzylidene malononitrile (0.25 $g/m^2$), trioctylamine (0.15 $g/m^2$) and a poly(dimethyl-co-methylphenylsiloxane) surfactant (0.06 $g/m^2$).

The neutralization is calculated according to the formula:

$$\% \text{ neutralization} = \frac{\text{M.W.ionophore} \times \text{wt. of base} \times 100}{\text{M.W. base} \times \text{wt. ionophore}}$$

Here,

$$\% \text{ neutralization} = \frac{282.4 \times 0.15 \times 100}{353.68 \times 0.25} = 47.9\%$$

Examples 2-16:

Variations were made to the hydrogen-ion-sensitive electrode described above as follows: The variations are in place of the corresponding component in the electrode of Example 1.

Example

2 - The reference element contained 1.25 g/$m^2$ sodium hydrogen phthalate buffer adjusted to pH 7.0.

3 - The reference element contained 2.5 g/$m^2$ NaCl.

4 - The membrane layer contained 5 g/$m^2$ poly(vinyl chloride)/polyvinyl acetate) 90:10 by weight as binder.

5 - The membrane layer contained 0.25 g/$m^2$ malononitrile-4-trifluoromethoxyphenyl-hydrazone as ionophore (43.1% neutralized).

6 - The membrane layer contained 0.25 g/$m^2$ malononitrile-4-dimethylaminophenylhydrazone as ionophore (36.2% neutralized).

7 - The membrane layer contained 0.25 g/$m^2$ malononitrile-4-nitrophenylhydrazone as ionophore (36.5% neutralized).

8 - The membrane layer contained 0.25 g/$m^2$ malononitrile-(3,5-dibromo-4-hydroxyphenyl)-hydrazone as ionophore (58.4% neutralized).

9 - The membrane layer contained 0.25 g/$m^2$ of 1-cyano-2-(3,5-di-t-butyl-4-hydroxyphenyl)-1-(4-nitrophenyl)ethylene as ionophore (64.2% neutralized).

10 - The membrane layer contained 0.25 $g/m^2$ of 4-hydroxy-3,5-dinitrobenzylidene malononitrile as ionophore (44.1% neutralized).

11 - The membrane layer contained 0.25 $g/m^2$ of 2-cyano-1-(3,5-di-t-butyl-4-hydroxyphenyl)-3-phenylpropene-3-one as ionophore (61.3% neutralized).

12 - The membrane layer contained 0.05 $g/m^2$ of tetramethylguanidine as base in place of the trioctylamine (49.0% neutralized).

13 - The membrane layer contained 6 $g/m^2$ of dioctylphenylphosphonate as carrier solvent.

14 - The membrane layer contained 6 $g/m^2$ of o-nitrophenylphenyl ether as carrier solvent.

15 - The membrane layer contained 6 $g/m^2$ of o-nitrophenyloctyl ether as carrier solvent.

16 - The membrane layer contained 6 $g/m^2$ of tris(2-ethylhexyl)phosphate as carrier solvent.

The ion-selective electrodes of Examples 1-16, represented as Ag/AgCl/gelatin-NaCl/hydrogen-ion ionophore, were tested by:

(1) connecting the silver/silver chloride film to the high-impedance input of a voltmeter and

(2) suspending a drop (10-50 µℓ) of a phosphate buffer solution to be measured from the tip of a saturated sodium nitrate salt bridge which was connected to an external reference electrode ($Hg/Hg_2-Cl_2$), which was in turn connected to the reference input of the voltmeter, and contacting the drop to the surface of the electrode.

Slopes of between 45-62 mV/pH unit between pH 4-9 were obtained. (The greater the slope, the greater the sensitivity.) The phosphate buffer solutions tested had concentrations ranging from 0.05-0.2 molar.

Example 17:

To demonstrate reduced (or early) response time and increased sensitivity, the following electrodes for the determination of $H^+$ were prepared:

| | | $g/m^2$ |
|---|---|---|
| Membrane | PVCC (carboxylated PVC) | 5.0 |
| | Bis(2-ethylhexyl)-4-nitrophthalate (solvent) | 6.0 |
| | Ionophore* | 0.25 |
| | Trioctylamine (base) (amounts shown in Table I) | |
| | DC-510 (Trade Mark) (surfactant) | 0.06 |
| Reference Element | Deionized gelatin | 5.0 |
| | NaCl | 2.5 |
| | Sodium Hydrogen Phthalate | 2.5 |
| | Triton X-100 (Trade Mark) (surfactant) | 0.06 |
| | - - - - - - - - - - - - - - - - - - - - | |
| | AgCl | |
| | Ag° | |
| Support | / / / / / / / / / / / / / / / / / / / / / | |

*Ionophore:

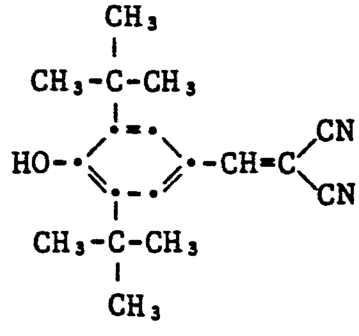

Table I

| ISE No. | TOA($g/m^2$) | Percent Neutralization | Slope mV/decade |
|---|---|---|---|
| A | 0. | 0. | 13.5 |
| B | .08 | 25.6 | 49.8 |
| C | .15 | 47.9 | 59.7 |
| D | .23 | 73.5 | 60.4 |
| E | .30 | 95.8 | 61.7 |

The electrodes were tested as described above. The resulting slopes, shown in Table I, were obtainable at approximately 1 1/2 minutes; 3 minutes is generally the accepted read time. The electrodes thus demonstrated reduced response time in that they stabilized in less than the usual amount of time.

The data in Table I demonstrate that the slope obtained at 0 $g/m^2$ of base was not useful (13.5 mV/decade), at 0.08 $g/m^2$, a more sensitive and somewhat useful response was obtained (49.8 mV/decade), and at 0.15 $g/m^2$, a very useful and very sensitive response curve was obtained. The data also show that increasing the amount of base to 0.23 and 0.30 $g/m^2$ did not significantly improve the sensitivity.

CLAIMS:

1. An ion-selective membrane including:

(a) a hydrogen-ion ionophore and

(b) a compound capable of solvating a complex of a hydrogen ion and the hydrogen-ion ionophore,

characterized in that the ionophore is at least partially neutralized with base.

2. The membrane of claim 1 further including a hydrophobic binder and wherein the hydrogen-ion ionophore is hydrophobic.

3. The membrane of claim 1 or claim 2 wherein the ionophore is neutralized by a base in an amount sufficient to neutralize at least 10 percent of the ionophore on a molar basis.

4. The membrane of any one of claims 1-3 wherein the ionophore is a hydrophobic derivative of a compound that uncouples oxidative phosphorylation in mitochondria and chloroplasts.

5. The membrane of any one of claims 1-4 wherein the ionophore has the formula:

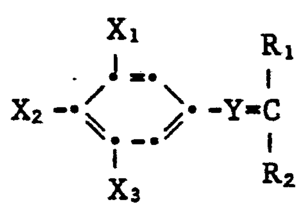

wherein:

$X_1$, $X_2$, and $X_3$ are independently selected and each can be a hydroxy group, an amino group, a halogen, a halogen-substituted alkyl group, an alkoxy group, a halogen-substituted alkoxy group, an alkyl group having from 4 to 8 carbon atoms, or an electron-withdrawing group, provided that not more than one of $X_1$, $X_2$ and $X_3$ is hydroxy;

Y can be N, CH, or NH-N provided that, if Y is N or CH, one of $X_1$, $X_2$, and $X_3$ must be hydroxy, and if Y is NH-N, $X_1$, $X_2$, and $X_3$ can be from the group described above or hydrogen, and;

$R_1$ and $R_2$ are independently selected electron-withdrawing groups or represent the atoms necessary to complete a carbocyclic ring structure.

6. The membrane of any one of claims 1-5 wherein the ionophore is:

(a) 3,5-di-t-butyl-4-hydroxybenzylidene malononitrile,

(b) malononitrile-4-trifluoromethoxyphenyl-hydrazone,

(c) malononitrile-4-dimethylaminophenyl-hydrazone,

(d) malononitrile-4-nitrophenylhydrazone,

(e) malononitrile-(3,5-dibromo-4-hydroxy-phenyl)hydrazone,

(f) 1-cyano-2-(3,5-di-t-butyl-4-hydroxyphenyl)-1-(4-nitrophenyl)ethylene,

(g) 4-hydroxy-3,5-dinitrobenzylidene malononitrile, or

(h) 2-cyano-1-(3,5-di-t-butyl-4-hydroxyphenyl)-3-phenylpropene-3-one.

7. The membrane of any one of claims 1-6 wherein the compound capable of solvating a complex of a hydrogen ion and the hydrogen-ion ionophore is a phthalate, sebacate, an aromatic or aliphatic ether, a phosphate, a mixed aromatic aliphatic phosphate, an adipate, a nitrated ether, or a mixture of these solvating compounds.

8. The membrane of any one of claims 1-7 wherein the compound capable of solvating a complex of a hydrogen ion and the hydrogen-ion ionophore is bis(2-ethylhexyl)-4-nitrophthalate, dioctylphenyl-phosphonate, o-nitrophenylphenylether, o-nitro-phenyloctylether, or tris(2-alkylhexyl)phosphate.

9. A dry-operative hydrogen ion-selective electrode including:

(a) a dried internal reference electrode including the dried residue of a solution of a salt and a hydrophilic polymeric binder in a solvent for the polymer and the salt, and

(b) in contact with the reference electrode, the ion-selective membrane of any one of claims 1-8 having a predetermined uniform thickness in regions thereof intended for contact with a sample for analysis, wherein the ion-selective membrane is hydrophobic.

10. A dry-operative ion-selective electrode including a support having thereon:

(a) a dried internal reference electrode including a metal/metal salt reference electrode, said reference electrode having a conducting layer of a metal in contact with a layer of an insoluble salt of the metal, and a dried electrolyte layer including the dried residue of a water-soluble salt having as an anion the anion of the metal salt layer and a hydrophilic polymeric binder in a solvent for the polymer and salt, and

(b) in contact with the reference electrode, the ion-selective membrane of any one of claims 1-8 having a predetermined uniform thickness in regions thereof intended for contact with a sample for analysis, wherein the ion-selective membrane is hydrophobic.

European Patent Office

# EUROPEAN SEARCH REPORT

0074198
Application number

EP 82 30 4355.9

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| P,X | RESEARCH DISCLOSURE, No. 212 December 1981, Havant "Hydrogen ion-selective membrane composition" pages 443 to 444 (No. 21224) * complete document * -- | 1-10 | B 01 D 13/04<br>G 01 N 27/40 |
| D,A | US - A - 3 743 588 (J.F. BROWN, et al.) * claims 1 to 4 * -- | | |
| | | | TECHNICAL FIELDS SEARCHED (Int.Cl. 3) |
| D,A | US - A - 4 214 968 (C.J. BATTAGLIA et al.) * claim 1 * -- | | B 01 D 13/04<br>C 25 C 7/04<br>G 01 N 27/26<br>G 01 N 27/30<br>G 01 N 27/40 |
| A | DE - A - 2 357 039 (AVESTA JERNVERKS) * claims 1 to 5 * -- | | |
| A | DE - A - 2 319 365 (W. MÖLLER, GLASBLÄSEREI) * claim 1 * & GB - A - 1 432 807 -- | | |
| A | DE - A1 - 2 525 695 (W. MÖLLER, GLASBLÄSEREI) * page 3 * & GB - A - 1 515 025 -- | | |
| | ./.. | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 26-11-1982 | KÜHN |

European Patent Office

# EUROPEAN SEARCH REPORT

0074198

Application number
EP 82 30 4355.9
- page 2 -

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | DE - A1 - 2 711 270 (IMPERIAL CHEMICAL INDUSTRIES)<br>* claims 1 to 3, 5 *<br>& US - A - 4 151 049<br>-- | | |
| A | J.D. DUNITZ et al. "Structure and bonding", Vol. 16<br>1973, SPRINGER-VERLAG, New York<br>pages 113 to 160<br>* complete document *<br>---- | | TECHNICAL FIELDS SEARCHED (Int. Cl.³) |

EPO Form 1503.2 06.78